# EUROPEAN PATENT SPECIFICATION

(11) **EP 3 428 089 B1**
(45) Date of publication and mention of the grant of the patent: **08.04.2026**
(21) Application number: 16893554.2
(22) Date of filing: 29.06.2016
(51) Int. Cl.: B65G 47/26, B65G 43/10, B65G 43/08, B65G 47/30

(54) **ACCUMULATION CONVEYOR SYSTEM AND TRANSPORT SYSTEM**
AKKUMULATIONSFÖRDERSYSTEM UND TRANSPORTSYSTEM
SYSTÈME DE TRANSPORTEURS ACCUMULATEURS ET SYSTÈME DE TRANSPORT

(30) Priority: 09.03.2016 JP 2016045644
(43) Date of publication of application: 16.01.2019
(73) Proprietor: Mitsubishi Heavy Industries Machinery Systems, Ltd., Hyogo-ku Kobe-shi Hyogo 652-8585 (JP)
(72) Inventor: MIGITAKA Aya, Kobe-shi Hyogo 652-0863 (JP); HIRANO Yasuyuki, Kobe-shi Hyogo 652-0863 (JP); ITOU Daisuke, Kobe-shi Hyogo 652-0863 (JP)
(74) Representative: Hoffmann Eitle
(86) International application number: PCT/JP2016/069296
(87) International publication number: WO 2017/154230

(56) References cited:
- WO-A1-2014/085429
- JP-A- 2006 069 744
- JP-A- 2006 069 744
- JP-A- 2011 088 741
- JP-A- 2014 080 295
- JP-A- 2015 202 913
- JP-U- H0 544 911

## Description

### Technical Field

The present invention relates to an accumulation conveyor system and a transport system.

Priority is claimed on Japanese Patent Application No. 2016-045644 filed on March 9, 2016.

### Background Art

As a transport system for transporting containers such as bottles, there is a case where an accumulation conveyor system in which containers can be accumulated in the middle is used. In the accumulation conveyor system, the containers are transported on a plurality of accumulation conveyors toward the downstream side from the upstream side. In the accumulation conveyor system, in a state where the accumulation conveyor disposed on the downstream side is stopped or decelerated, the accumulation conveyor adjacent thereto on the upstream side moves. In this way, in the accumulation conveyor system, the containers are accumulated in a connection portion between the accumulation conveyors.

A container sterilizing apparatus using such an accumulation conveyor system is described in Japanese Unexamined Patent Application Publication No. 2000-136017. The sterilizing apparatus of JP 2000-136017 has, as an accumulation conveyor system, an inlet conveyor for supplying containers, an outlet conveyor for transporting the containers to the downstream side, and a transport conveyor for transporting the containers from the inlet conveyor to the outlet conveyor. In this sterilizing apparatus, a bypass conveyor connecting the outlet conveyor and the inlet conveyor to each other is provided separately from the transport conveyor. The sterilizing apparatus is provided with detection means for detecting a stop of a line downstream of the outlet conveyor or fullness of the outlet conveyor. For this reason, in the sterilizing apparatus, it is possible to return the container which has been sent to the outlet conveyor to the inlet conveyor through the bypass conveyor according to the detection result of the detection means.

In the accumulation conveyor system as described above, speed control is performed for each accumulation conveyor such as the transport conveyor or the outlet conveyor. Specifically, in a case where the load of the containers placed on the entire area of one accumulation conveyor exceeds a reference determined in advance, the accumulation conveyor is stopped or decelerated. That is, the control of the speed of the accumulation conveyor is performed on the basis of the load as a whole.

JP 2006 069744 A, JP 2011 088741 A and JP 2014 080295 A disclose an accumulation conveyor system which represent the closest prior art. In particular,JP 2006 069744 A discloses an accumulation conveyor system according to the preamble of claim 1.

### Summary of Invention

### Technical Problem

Incidentally, in the accumulation conveyor system, even in a case where the load of the containers in one accumulation conveyor falls below the reference as a whole, there is a case where a state where the containers are densely collected partially is created. However, as described above, the speed of the accumulation conveyor is controlled on the basis of the load of the entire area. For this reason, even in a case where the containers are densely collected partially in a part of the accumulation conveyor, the accumulation conveyor continues to move. In this way, for example, in a case where the accumulation conveyor on the downstream side is stopped, the closely disposed containers push one another at the connection portion with the accumulation conveyor adjacent thereto. As a result, there is a possibility that the container which is being transported may be subjected to damage such as scratches or dents, due to occurrence of great pressure in the containers adjacent to each other. Therefore, even in a case where workpieces to be transported, such as containers, are densely collected partially on one accumulation conveyor, there is a demand for suppressing damage to the workpiece.

The present invention has been made in order to meet the above demand and has an object to provide an accumulation conveyor system and a transport system, in which it is possible to suppress damage to a workpiece even in a case where the workpieces are densely collected partially on one accumulation conveyor.

### Solution to Problem

This object is solved by an accumulation conveyor system with the features of claim 1 and a transport system with the features of claim 8. Preferred embodiments follow from the other claims.

In order to solve the above problem, the present invention proposes the following means.

According to a first aspect of the present invention, there is provided an accumulation conveyor system including: a plurality of accumulation conveyors arranged such that workpieces are sequentially transported toward the downstream side; a partial load detection unit that detects a partial load that is a load of the workpieces only in a detection area that is a partial area which includes a downstream end in a transport direction of an area in which the workpieces are transported on at least one accumulation conveyor among the plurality of accumulation conveyors; and a speed control unit that adjusts a speed of the accumulation conveyor, based on a value of the partial load detected by the partial load detection unit, in which the speed control unit decreases the speed of the accumulation conveyor according to an increase in the value of the partial load, wherein the partial load detection unit includes a plurality of encoders which are provided for each of the accumulation conveyors and are configured to output a signal according to a transport distance of the at least one accumulation conveyor among the plurality of accumulation conveyors, and wherein a load calculation unit that is configured to calculate the partial load according to the signal from the encoders of the at least one accumulation conveyor among the plurality of accumulation conveyors .

According to such a configuration, it is possible to decrease the speed of the accumulation conveyor according to the load of the workpieces only in the detection area that is a partial area which includes the downstream end in the transport direction of the entire area for transporting the workpieces on each accumulation conveyor. Therefore, it is possible to adjust the movement of the accumulation conveyor in accordance with a partial loading state of the workpieces in the detection area, regardless of a loading state of the workpieces in the entire area of the accumulation conveyor. As a result, it is possible to prevent the workpieces from being excessively sent to the detection area due to the continuous movement of the accumulation conveyor. In this way, it is possible to prevent the pressure which is generated due to excessively sending the workpieces from acting on the workpieces densely collected in the detection area.

Further, in an accumulation conveyor system according to a second aspect of the present invention, in the first aspect, the accumulation conveyor system may further include a first determination unit that determines whether or not the value of the partial load of a first accumulation conveyor that is one of the plurality of accumulation conveyors, detected by the partial load detection unit, has exceeded a first threshold value determined in advance, in which the speed control unit may decrease a speed of the first accumulation conveyor in a case where the first determination unit determines that the value of the partial load has exceeded the first threshold value.

According to such a configuration, in a case where the workpieces are densely collected in the detection area of the first accumulation conveyor, it is possible to prevent the workpieces from being excessively sent to this detection area, with high accuracy.

Further, in an accumulation conveyor system according to a third aspect of the present invention, in the second aspect, the speed control unit may decrease the speed of the first accumulation conveyor to the same speed range as that of a second accumulation conveyor adjacent to the first accumulation conveyor on the downstream side, in a case where the first determination unit determines that the value of the partial load has exceeded the first threshold value.

According to such a configuration, the speed of the first accumulation conveyor is reduced to the same speed range as that of the second accumulation conveyor on the downstream side. In this way, it is possible to minimize the amount of workpieces which are sent from the first accumulation conveyor to the second accumulation conveyor.

Further, in an accumulation conveyor system according to a fourth aspect of the present invention, in any one of the first to third aspects, the speed control unit may increase the speed of the accumulation conveyor according to a decrease in the value of the partial load.

According to such a configuration, it is possible to increase the speed of the accumulation conveyor according to the partial load. Therefore, in a case where the amount of workpieces in the detection area decreases, it is possible to efficiently send the workpieces to the detection area.

Further, in an accumulation conveyor system according to a fifth aspect of the present invention, in the fourth aspect, the accumulation conveyor system may further include a second determination unit that determines whether or not the value of the partial load of a first accumulation conveyor that is one of the plurality of accumulation conveyors, detected by the partial load detection unit, has fallen below a second threshold value determined in advance, in which the speed control unit may increase the speed of the first accumulation conveyor in a case where the second determination unit determines that the value of the partial load has fallen below the second threshold value.

According to such a configuration, in a case where the amount of workpieces densely collected in the detection area of the first accumulation conveyor is small, it is possible to increase the amount of workpieces in the detection area by sending the workpieces from the upstream side of the first accumulation conveyor to the detection area. For this reason, it is possible to prevent a reduction in the amount of workpieces which are sent from the detection area facing the downstream end of the first accumulation conveyor to the second accumulation conveyor. In this way, it is possible to continue to stably send the workpieces from the first accumulation conveyor to the second accumulation conveyor.

Further, in an accumulation conveyor system according to a sixth aspect of the present invention, in any one of the first to fifth aspects, the accumulation conveyor system may further include a total load detection unit that detects a total load that is a load of the workpieces in an entire area in which the workpieces are transported on the one accumulation conveyor, and a first overall determination unit that determines whether or not a value of the total load of a first accumulation conveyor that is one of the plurality of accumulation conveyors, detected by the total load detection unit, has exceeded a first overall threshold value determined in advance, in which the speed control unit may decrease a speed of the first accumulation conveyor in a case where the first overall determination unit determines that the value of the total load has exceeded the first overall threshold value.

According to such a configuration, it is possible to decrease the speed of the accumulation conveyor according to the load of the workpieces in the entire area for transporting the workpieces on each accumulation conveyor, in addition to the partial load. Therefore, it is possible to adjust the movement of the accumulation conveyor according to the loading state of the workpieces in the entire area of the accumulation conveyor and then adjust the movement of the accumulation conveyor in accordance with a partial loading state of the workpieces of the detection area. As a result, it is possible to prevent excessive pressure from acting on the workpieces densely collected in the detection area while preventing the workpieces from being excessively sent as a whole of the accumulation conveyor.

Further, in an accumulation conveyor system according to a seventh aspect of the present invention, in any one of the first to sixth aspects, the partial load detection unit may include a plurality of encoders which are provided for each of the accumulation conveyors and output a signal according to a transport distance of the accumulation conveyor, in which the workpiece is transported, and a load calculation unit that calculates the load according to the signal from the encoder.

According to such a configuration, it is possible to stably obtain the load of the workpieces only in the detection area with a simple configuration using the encoder.

Further, according to an eighth aspect of the present invention, there is provided a transport system including: the accumulation conveyor system according to any one of the first to seventh aspects; a supply conveyor disposed on the upstream side of the plurality of accumulation conveyors in the transport direction to introduce the workpieces to the plurality of accumulation conveyors; and a delivery conveyor disposed on the downstream side of the plurality of accumulation conveyors in the transport direction to carry the workpieces out of the plurality of accumulation conveyors.

According to such a configuration, by suppressing damage to the workpiece by the accumulation system, it is possible to transport a workpiece having a stable quality to a device disposed downstream.

### Advantageous Effects of Invention

According to the present invention, by changing the speed of the accumulation conveyor according to the load of the workpieces only in the detection area, it is possible to suppress damage to the workpiece even in a case where the workpieces are densely collected partially on one accumulation conveyor.

### Brief Description of Drawings

Fig. 1 is a schematic diagram for describing a transport system according to the present embodiment.
Fig. 2 is a block diagram for describing a control unit of the transport system according to the embodiment.
Fig. 3 is a schematic diagram for describing a storage area of a load calculation unit according to the embodiment.
Fig. 4 is a first flow diagram for describing an operation flow of an accumulation conveyor system according to the embodiment.
Fig. 5 is a second flow diagram for describing the operation flow of the accumulation conveyor system according to the embodiment.
Fig. 6 is a third flow diagram for describing the operation flow of the accumulation conveyor system according to the embodiment.
Fig. 7 is a fourth flow diagram for describing the operation flow of the accumulation conveyor system according to the embodiment.
Fig. 8 is a fifth flow diagram for describing the operation flow of the accumulation conveyor system according to the embodiment.

### Description of Embodiments

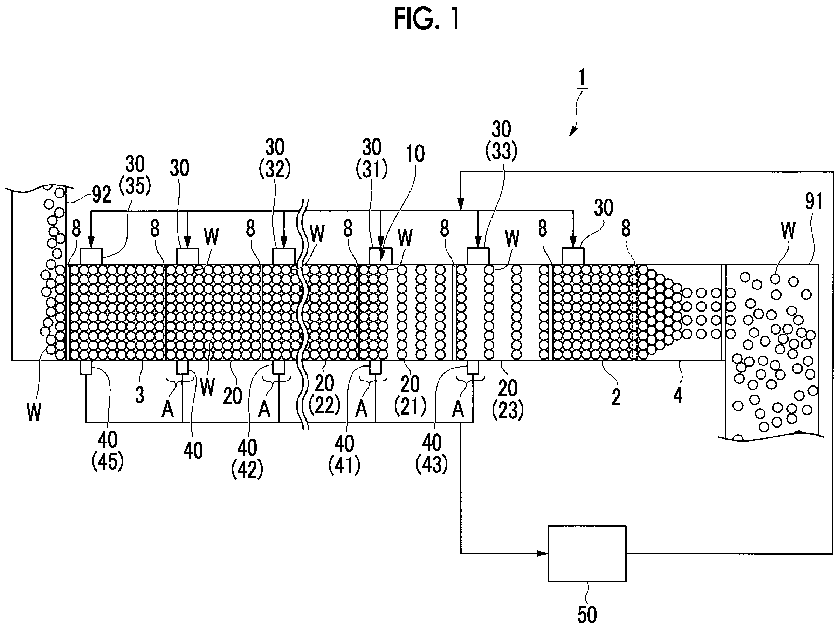

Hereinafter, a transport system according to the present embodiment of the present invention will be described with reference to Figs. 1 to 8.

A transport system 1 according to the embodiment of the present invention is a conveyor line for transporting a large number of workpieces W which have been sent from a transport conveyor 91 configuring an upstream-side line to a transport conveyor 92 configuring a downstream-side line. The transport system 1 of this embodiment transports containers that are easy to be dented, such as PET bottles, as the workpieces W to be transported. The transport system 1 is provided with an alignment conveyor 4, a supply conveyor 2, an accumulation conveyor system 10, and a delivery conveyor 3, as shown in Fig. 1.

The alignment conveyor 4 is disposed on the further upstream side in a transport direction, which is a direction in which the workpieces W are transported, with respect to a plurality of accumulation conveyors 20. The alignment conveyor 4 is disposed on the further upstream side in the transport direction with respect to the supply conveyor 2. The alignment conveyor 4 receives the workpieces W which have been transported from the upstream-side transport conveyor 91 and sends the workpieces W to the supply conveyor 2. For the alignment conveyor 4 of this embodiment, for example, a top chain type conveyor, in which a plate is mounted on an upper portion of a chain, a belt conveyor, or a roller conveyor is used. The alignment conveyor 4 is driven by a motor. A flat plate-shaped bridge plate 8 is provided between the alignment conveyor 4 and the supply conveyor 2 adjacent thereto.

The supply conveyor 2 introduces the workpieces W into the plurality of accumulation conveyors 20 of the accumulation conveyor system 10 (described later). The supply conveyor 2 is disposed on the further upstream side in the transport direction, which is a direction in which the workpieces W are transported, with respect to the plurality of accumulation conveyors 20. The supply conveyor 2 temporarily accumulates the workpieces W which have been sent from the alignment conveyor 4 and then sends the workpieces W to the plurality of accumulation conveyors 20. The speed of the supply conveyor 2 transporting the workpiece W is set to be slower than that of the upstream-side transport conveyor 91 or the alignment conveyor 4. Therefore, the plurality of workpieces W which are transported by the supply conveyor 2 are sent to the accumulation conveyor system 10 in a state where the workpieces W are collected so as to be in close contact with each other. For the supply conveyor 2 of this embodiment, for example, a top chain type conveyor, in which a plate is mounted on an upper portion of a chain, a belt conveyor, or a roller conveyor is used. The supply conveyor 2 is driven by a motor. The supply conveyor of this embodiment is driven by, for example, a servomotor 30. The supply conveyor 2 is controlled to be stopped and started by a control unit 50 (described later) of the accumulation conveyor system 10. The flat plate-shaped bridge plate 8 is provided between the supply conveyor 2 and the accumulation conveyor 20 adjacent thereto.

The accumulation conveyor system 10 is capable of accumulating (temporarily densely collecting) the workpieces W transported and supplied thereto in multiple rows. The accumulation conveyor system 10 accumulates the workpieces W when the flow of the workpieces W which are being transported is temporarily interrupted due to each device disposed downstream of the transport system 1. The accumulation conveyor system 10 of this embodiment includes the plurality of accumulation conveyors 20, an encoder 40, and the control unit 50.

The plurality of accumulation conveyors 20 are arranged such that the workpieces W are sequentially transported toward the downstream side in the transport direction from the supply conveyor 2. The plurality of accumulation conveyors 20 are disposed in series in the transport direction. The accumulation conveyor 20 transports the workpieces W from an upstream end in the transport direction to a downstream end with the workpieces W placed on the surface facing upward in a vertical direction. The accumulation conveyor 20 is made to be capable of stepwise changing the speed of the accumulation conveyor 20 transporting the workpiece W from a speed equivalent to the speed of the supply conveyor 2 to several times the speed of the supply conveyor 2, on the basis of the speed at which the supply conveyor 2 transports the workpiece W. The accumulation conveyor 20 of this embodiment is made to be capable of changing a speed from a speed equivalent to the speed of the supply conveyor 2 to a speed in a range of about 5 times to 10 times the speed of the supply conveyor 2, for example. For the accumulation conveyor 20 of this embodiment, for example, a top chain type conveyor, in which a plate is mounted on an upper portion of a chain, a belt conveyor, or a roller conveyor is used. Each of the accumulation conveyors 20 is driven by a motor. The accumulation conveyor 20 of this embodiment is driven by the servomotor 30. Therefore, the plurality of accumulation conveyors 20 are made to be capable of independently changing speeds at which the accumulation conveyors 20 transport the workpieces W. The flat plate-shaped bridge plate 8 is provided between the accumulation conveyors 20 adjacent to each other.

In this embodiment, for description, one of the plurality of accumulation conveyors 20 is referred to as a first accumulation conveyor 21. Further, in this embodiment, among the plurality of accumulation conveyors 20, the accumulation conveyor 20 adjacent to the downstream side in the transport direction with respect to the first accumulation conveyor 21 is referred to as a second accumulation conveyor 22. Further, in this embodiment, among the plurality of accumulation conveyors 20, the accumulation conveyor 20 adjacent to the upstream side in the transport direction with respect to the first accumulation conveyor 21 is referred to as a third accumulation conveyor 23.

Further, in this embodiment, the servomotor 30 that drives the first accumulation conveyor 21, among the servomotors 30 that drive the accumulation conveyors 20, is referred to as a first servomotor 31. Similarly, the servomotor 30 that drives the second accumulation conveyor 22 is referred to as a second servomotor 32. Further, the servomotor 30 that drives the third accumulation conveyor 23 is referred to as a third servomotor 33.

A plurality of encoders 40 are provided for each accumulation conveyor 20. The encoder 40 outputs a signal according to the transport distance of the accumulation conveyor 20. Specifically, the encoder 40 outputs a signal to the control unit 50 according to the rotational frequency, the rotation amount, or the like of the servomotor 30. The encoder 40 of this embodiment outputs a pulse signal every time the accumulation conveyor 20 moves by a specified distance obtained by dividing the distance in the transport direction in one accumulation conveyor 20 into a plurality of parts.

In this embodiment, the encoder 40 provided in the first accumulation conveyor 21 is referred to as a first encoder 41. Further, in this embodiment, the encoder 40 provided in the second accumulation conveyor 22 is referred to as a second encoder 42. Further, in this embodiment, the encoder 40 provided in the third accumulation conveyor 23 is referred to as a third encoder 43.

The encoder 40 is also provided in the delivery conveyor 3. In this embodiment, the encoder 40 provided in the delivery conveyor 3 is referred to as a carry-out encoder 45.

The delivery conveyor 3 carries out the workpieces W from the plurality of accumulation conveyors 20. The delivery conveyor 3 is disposed on the further downstream side in the transport direction of the workpiece W with respect to the plurality of accumulation conveyors 20. The delivery conveyor 3 temporarily accumulates the workpieces W which have been transported from the plurality of accumulation conveyors 20, and then sends the workpieces W to the downstream-side transport conveyor 92. The speed of the delivery conveyor 3 transporting the workpiece W is set to be slower than that of the downstream-side transport conveyor 92. The delivery conveyor 3 is made such that the speed of the delivery conveyor 3 transporting the workpiece W can be changed according to the demand of downstream equipment on the basis of the supply conveyor 2. For the delivery conveyor 3 of this embodiment, for example, a top chain type conveyor, in which a plate is mounted on an upper portion of a chain, a belt conveyor, or a roller conveyor is used. The delivery conveyor 3 is driven by a motor. The delivery conveyor 3 of this embodiment is driven by a carry-out servomotor 35 that is the servomotor 30 which is controlled by the control unit 50. That is, the delivery conveyor 3 is controlled to be stopped and started by the control unit 50. The flat plate-shaped bridge plate 8 is provided between the delivery conveyor 3 and the accumulation conveyor 20 adjacent thereto.

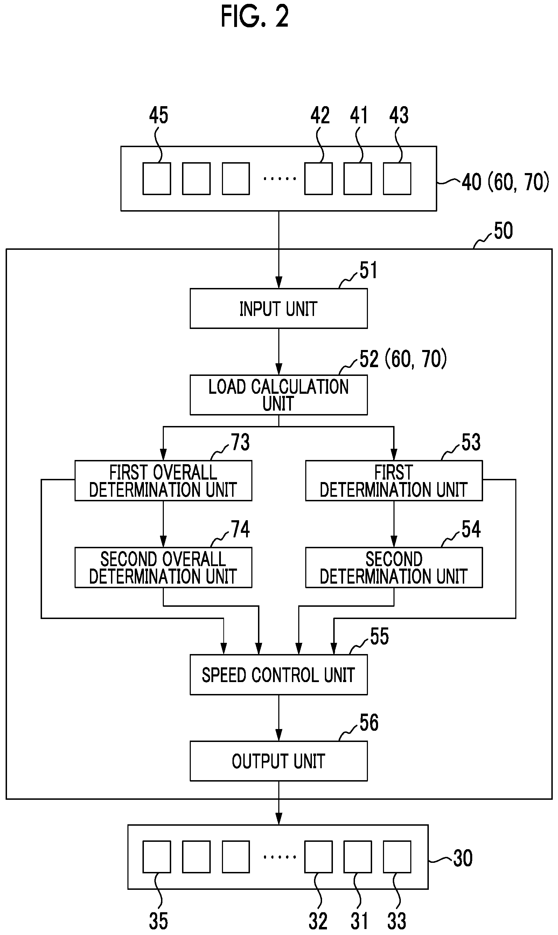

The control unit 50 controls the transport state of the workpiece W of the transport system 1 according to the signals from the encoders 40. The control unit 50 of this embodiment controls the stop and start-up of the supply conveyor 2 and the delivery conveyor 3 or controls the stop, start-up, and speed of the accumulation conveyor 20. The control unit 50 of this embodiment includes an input unit 51, a load calculation unit 52, a first overall determination unit 73, a second overall determination unit 74, a first determination unit 53, a second determination unit 54, a speed control unit 55, and an output unit 56, as shown in Fig. 2.

Signals from the plurality of encoders 40 provided for each of the delivery conveyor 3 and the accumulation conveyors 20 are input to the input unit 51. The input unit 51 outputs the signal input from each of the encoders 40 to the load calculation unit 52.

The load calculation unit 52 configures a part of a partial load detection unit 60 together with the plurality of encoders 40. The partial load detection unit 60 detects a partial load that is the load of the workpieces W only in a detection area A. The detection area A is a partial area that includes a downstream end in a transport direction of an area in which the workpieces W are transported on each of the accumulation conveyors 20. The load calculation unit 52 also configures a part of a total load detection unit 70 together with the plurality of encoders 40. The total load detection unit 70 detects a total load. The total load is the load of the workpieces W in the entire area in which the workpieces W are transported on one accumulation conveyor 20.

The load calculation unit 52 calculates the total load that is a load in the entire area of the corresponding accumulation conveyor 20 by the signal from the encoder 40. The load calculation unit 52 calculates the partial load that is a load only in the detection area A of the corresponding accumulation conveyor 20 by the signal from the encoder 40. The load calculation unit 52 outputs information on the calculated total load to the first overall determination unit 73. The load calculation unit 52 outputs information on the calculated partial load to the first determination unit 53. For example, when calculating the load on the first accumulation conveyor 21, the load calculation unit 52 of this embodiment uses not only the signal of the first encoder 41 but also the signal of the third encoder 43 of the third accumulation conveyor 23 adjacent thereto on the upstream side.

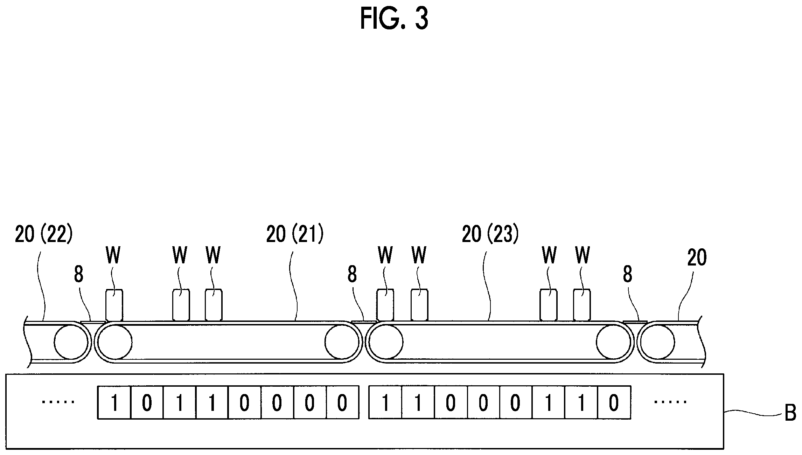

Specifically, as shown in Fig. 3, in a case where the workpiece W is present on the accumulation conveyor 20, a pulse signal is output from the encoder 40. In this way, the load calculation unit 52 stores information counted through a counter module or the like in a storage area B provided in a memory or the like. Therefore, in the load calculation unit 52, for example, in a portion in which the workpiece W is present on the accumulation conveyor 20, 1 is stored in the corresponding storage area B. Further, in the load calculation unit 52, in a portion in which the workpiece W is not present on the accumulation conveyor 20, 0 is stored in the corresponding storage area B. The storage area B is provided in each of the plurality of accumulation conveyors 20. A plurality of storage areas B are provided for each accumulation conveyor 20 according to a specified distance. Then, the load calculation unit 52 detects a portion in which the workpiece W is present due to the transfer of the workpiece W to the most-upstream accumulation conveyor 20 in a situation where the supply conveyor 2 is moving, and stores count information in the storage area B. The load calculation unit 52 stores the count information while handing over the count information to the corresponding storage area B so as to correspond to the position of the workpiece W, as the accumulation conveyor 20 moves. In the load calculation unit 52, for example, the count information that is 1 stored in the storage area B is handed over to another storage area B along with the movement of the workpiece W due to the movement of the accumulation conveyor 20.

Further, in the load calculation unit 52, the count information is handed over between the accumulation conveyors 20 adjacent to each other. For example, there is a case where in a state where the workpiece W is placed on the downstream end of the third accumulation conveyor 23 and 1 is stored in the corresponding storage area B, the third accumulation conveyor 23 moves, whereby the workpiece W is transferred to the upstream end of the first accumulation conveyor 21 adjacent thereto. In this case, new signals are output from the third encoder 43 and the first encoder 41. As a result, in response to the transfer of the workpiece W to the upstream end of the first accumulation conveyor 21 adjacent to the third accumulation conveyor 23, information that is 1 is handed over to and stored in the storage area B corresponding to the upstream end of the first accumulation conveyor 21.

Further, there is a case where the speed at which the accumulation conveyor 20 adjacent to the downstream side transports the workpiece W is slow. In such a case, the count information is integrated into the storage area B of the accumulation conveyor 20 until a pulse signal is output from the encoder 40 of the accumulation conveyor 20 adjacent to the downstream side. That is, the count information is integrated into the storage area B corresponding to the downstream end of the accumulation conveyor 20. For this reason, in the storage area B corresponding to the downstream end of the accumulation conveyor 20, the count information increases to 2, 3, 4, ... in response to the accumulation of the workpieces W. Therefore, for example, in a case where the speed of the first accumulation conveyor 21 is slower than the speed of the third accumulation conveyor 23, the count information stored in the storage area B corresponding to the downstream end of the third accumulation conveyor 23 is increased to be added to 2, 3, 4, ....

As described above, by grasping the accumulation position of the workpiece W by using the count information, the load calculation unit 52 calculates a loading situation of the workpiece W for each specified position in the accumulation conveyor 20. The load calculation unit 52 calculates the count information stored in the storage area B corresponding to the entire area, of the count information stored in the storage area B corresponding to the calculated loading situation of the workpiece W for each specified position. The load calculation unit 52 outputs the calculation result to the first overall determination unit 73. In this way, the load calculation unit 52 calculates and outputs the total load.

Further, the load calculation unit 52 calculates the count information stored in the storage area B corresponding to the detection area A, of the count information stored in the storage area B corresponding to the calculated loading situation of the workpiece W for each specified position. The load calculation unit 52 outputs the calculation result to the first determination unit 53. In this way, the load calculation unit 52 calculates and outputs the partial load.

Further, the detection area A in this embodiment is a partial area from the downstream end, of the entire area where the workpiece W is transported in one accumulation conveyor 20. That is, the detection area A is not the entire area from the downstream end to the upstream end of the accumulation conveyor 20 but is only a partial area extending toward the upstream side from the downstream end. The detection area A is set according to the strength of the workpiece W which is transported, or the allowable degree of damage to the workpiece W. For example, in the case of the workpiece W which is easily damaged, like a container such as a PET bottle which is easy to be dented, the detection area A is set to be short with respect to the distance in the transport direction of the accumulation conveyor 20. Conversely, in the case of the workpiece W which is hard to be damaged, like a container such as a hard bottle, the detection area A is set to be long with respect to the distance in the transport direction of the accumulation conveyor 20. For example, with respect to the length of the detection area A in the transport direction, in a case where the distance in the transport direction of the accumulation conveyor 20 is 160 cm, the length of the detection area A in the transport direction from the downstream end is set to 80 cm (half of the distance in the transport direction of the accumulation conveyor 20) or less, or 50 cm (about 1/3 of the distance in the transport direction of the accumulation conveyor 20) or less.

The detection area A in this embodiment corresponds to some of the plurality of storage areas B corresponding to one accumulation conveyor 20. That is, the detection area A is composed of a predetermined number of storage areas B from the storage areas B corresponding to the downstream end of the accumulation conveyor 20.

As shown in Fig. 2, the first overall determination unit 73 determines whether or not the value of the total load of the accumulation conveyor 20, detected by the total load detection unit 70, has exceeded a first overall threshold value determined in advance. In this embodiment, information on the total load is input from the load calculation unit 52 to the first overall determination unit 73. The first overall determination unit 73 determines whether or not the input total load exceeds the first overall threshold value. In a case where it is determined that the total load has exceeded the first overall threshold value, the first overall determination unit 73 sends a signal to the speed control unit 55 so as to decelerate or stop the corresponding accumulation conveyor 20. In a case where it is determined that the total load has exceeded the first overall threshold value, the first overall determination unit 73 sends a signal to the speed control unit 55 so as to decelerate or stop the corresponding accumulation conveyor 20 and also sends a signal to the second overall determination unit 74.

The first overall threshold value in this embodiment is a value in which the entire area where the workpieces W are transported, in one accumulation conveyor 20, can be regarded as being filled with the workpieces W. Therefore, the first overall determination unit 73 of this embodiment determines whether or not the count information of a predetermined number of storage areas B corresponding to the entire area, input from the load calculation unit 52, exceeds a certain value.

The second overall determination unit 74 determines whether or not the value of the total load of the first accumulation conveyor 21, detected by the total load detection unit 70, has fallen below a second overall threshold value determined in advance. In this embodiment, a signal is input from the load calculation unit 52 to second overall determination unit 74 through the first overall determination unit 73. The second overall determination unit 74 determines whether or not the input total load falls below the second overall threshold value. In a case where it is determined that the total load is equal to or greater than the second overall threshold value, the second overall determination unit 74 sends a signal to the speed control unit 55 so as to increase or decrease the speed of the corresponding accumulation conveyor 20 according to the total load. In a case where it is determined that the total load falls below the second overall threshold value, the second overall determination unit 74 sends a signal to the speed control unit 55 so as to increase the speed of the corresponding accumulation conveyor 20 to the maximum speed.

The second overall threshold value in this embodiment is a value in which a space can be regarded as being available to send the workpieces W to the entire area. The second overall threshold value is set to a value smaller than the first overall threshold value. Therefore, the second overall determination unit 74 of this embodiment determines whether or not the count information of a predetermined number of storage areas B corresponding to the entire area, input from the load calculation unit 52, falls below a certain value. The second overall threshold value is not limited to a value smaller than the first overall threshold value and may be the same value as the first overall threshold value.

As shown in Fig. 2, the first determination unit 53 determines whether or not the value of the partial load of the first accumulation conveyor 21, detected by the partial load detection unit 60, has exceeded a first threshold value determined in advance. In this embodiment, information on the partial load is input from the load calculation unit 52 to the first determination unit 53. The first determination unit 53 determines whether or not the input partial load exceeds the first threshold value. In a case where it is determined that the partial load has exceeded the first threshold value, the first determination unit 53 sends a signal to the speed control unit 55 so as to decelerate or stop the corresponding accumulation conveyor 20. In a case where it is determined that the partial load has exceeded the first threshold value, the first determination unit 53 sends a signal to the speed control unit 55 so as to decelerate or stop the corresponding accumulation conveyor 20 and also sends a signal to the second determination unit 54.

The first threshold value in this embodiment is a value in which the detection area A can be regarded as being filled with the workpieces W. Therefore, the first determination unit 53 of this embodiment determines whether or not the count information of a predetermined number of storage areas B corresponding to the detection area A, input from the load calculation unit 52, exceeds a certain value.

The second determination unit 54 determines whether or not the value of the partial load of the first accumulation conveyor 21, detected by the partial load detection unit 60, has fallen below a second threshold value determined in advance. In this embodiment, a signal is input from the load calculation unit 52 to the second determination unit 54 through the first determination unit 53. The second determination unit 54 determines whether or not the input partial load falls below the second threshold value. In a case where it is determined that the partial load falls below the second threshold value, the second determination unit 54 sends a signal to the speed control unit 55 so as to increase the speed of the corresponding accumulation conveyor 20 to the maximum speed. In a case where it is determined that the partial load falls below the second threshold value, the second determination unit 54 sends a signal to the speed control unit 55 so as to increase or decrease the speed of the corresponding accumulation conveyor 20 according to the partial load.

The second threshold value in this embodiment is a value in which a space can be regarded as being available to send the workpieces W to the detection area A. The second threshold value is set to a value smaller than the first threshold value. Therefore, the second determination unit 54 of this embodiment determines whether or not the count information of a predetermined number of storage areas B corresponding to the detection area A, input from the load calculation unit 52, falls below a certain value. The second threshold value is not limited to a value smaller than the first threshold value and may be the same value as the first threshold value.

The speed control unit 55 adjusts the speed of the accumulation conveyor 20, based on the value of the load of the detection area A detected by the partial load detection unit 60 and the total load detection unit 70. The speed control unit 55 decreases the speed of the accumulation conveyor 20 according to an increase in the value of the total load detected by the total load detection unit 70 and also increases the speed of the accumulation conveyor 20 according to a decrease in the value of the total load. Further, the speed control unit 55 decreases the speed of the accumulation conveyor 20 according to an increase in the value of the partial load detected by the partial load detection unit 60 and also increase the speed of the accumulation conveyor 20 according to a decrease in the value of the partial load.

Specifically, different signals are input from the first overall determination unit 73 to the speed control unit 55 according to the determination result. In this embodiment, a signal indicating that the total load has exceeded the first overall threshold value is input from the first overall determination unit 73 to the speed control unit 55. At this time, in a state where the second accumulation conveyor 22 on the downstream side is stopped, the speed control unit 55 outputs a signal for stopping the speed of the first accumulation conveyor 21 to the output unit 56. In a state in which the second accumulation conveyor 22 on the downstream side is in operation, the speed control unit 55 outputs a signal for decreasing the speed of the first accumulation conveyor 21 to the same speed range as that of the second accumulation conveyor 22 to the output unit 56.

Here, the same speed range is not limited only to the value of a speed at which the speed of the first accumulation conveyor 21 and the speed of the second accumulation conveyor 22 completely coincide with each other. The same speed range is the range of a speed in which the speed of the first accumulation conveyor 21 can be regarded as being almost the same as the speed of the second accumulation conveyor 22 in transport of the workpieces W. For example, the same speed range in this embodiment is set to a speed in a range of about 0.8 times to 1.2 times the speed of the second accumulation conveyor 22.

In this embodiment, a signal indicating that the total load has not exceeded the first overall threshold value is input from the first overall determination unit 73 to the speed control unit 55. At this time, in a state where the second accumulation conveyor 22 on the downstream side is stopped, the speed control unit 55 outputs a signal for decreasing the speed of the first accumulation conveyor 21 to the same speed as the speed of the supply conveyor 2 to the output unit 56. In a state where the second accumulation conveyor 22 on the downstream side is in operation, the speed control unit 55 outputs a signal to the second overall determination unit 74.

Different signals are input from the second overall determination unit 74 to the speed control unit 55 according to the determination result of the second overall determination unit 74. A signal indicating that the total load has not exceeded the first overall threshold value has not been exceeded and has exceeded the second overall threshold value is input from the second overall determination unit 74 to the speed control unit 55. At this time, the speed control unit 55 outputs a signal for increasing or decreasing the speed of the first accumulation conveyor 21 according to the load of the workpieces W to the output unit 56.

A signal indicating that the total load has fallen below the second threshold value is input from the second overall determination unit 74 to the speed control unit 55. At this time, the speed control unit 55 outputs a signal for increasing the speed of the first accumulation conveyor 21 to the maximum speed to the output unit 56. Such a signal is input from the second determination unit 54, so that the speed control unit 55 of this embodiment outputs a signal for stepwise increasing the speed of the first accumulation conveyor 21 to the maximum speed to the output unit 56.

Different signals are input from the first determination unit 53 to the speed control unit 55 according to the determination result. In this embodiment, a signal indicating that the partial load has exceeded the first threshold value is input from the first determination unit 53 to the speed control unit 55. At this time, in a state where the second accumulation conveyor 22 on the downstream side is stopped, the speed control unit 55 outputs a signal for stopping the speed of the first accumulation conveyor 21 to the output unit 56. In a state where the second accumulation conveyor 22 on the downstream side is in operation, the speed control unit 55 outputs a signal for decreasing the speed of the first accumulation conveyor 21 to the same speed range as that of the second accumulation conveyor 22 to the output unit 56.

In this embodiment, a signal indicating that the partial load has not exceeded the first threshold value is input from the first determination unit 53 to the speed control unit 55. At this time, in a state where the second accumulation conveyor 22 on the downstream side is stopped, the speed control unit 55 outputs a signal for decreasing the speed of the first accumulation conveyor 21 to the same speed as the speed of the supply conveyor 2 to the output unit 56. In a state where the second accumulation conveyor 22 on the downstream side is in operation, the speed control unit 55 outputs a signal to the second determination unit 54.

Different signals are input from the second determination unit 54 to the speed control unit 55 according to the determination result of the second determination unit 54. A signal indicating that the partial load has not exceeded the first threshold value and has exceeded the second threshold value is input from the second determination unit 54 to the speed control unit 55. At this time, the speed control unit 55 outputs a signal for increasing or decreasing the speed of the first accumulation conveyor 21 according to the load of the workpieces W to the output unit 56.

A signal indicating that the partial load has fallen below the second threshold value is input from the second determination unit 54 to the speed control unit 55. At this time, the speed control unit 55 outputs a signal for increasing the speed of the first accumulation conveyor 21 to the maximum speed to the output unit 56. Such a signal is input from the second determination unit 54, so that the speed control unit 55 of this embodiment outputs a signal for stepwise increasing the speed of the first accumulation conveyor 21 to the output unit 56.

In a case of decelerating the first accumulation conveyor 21, the speed control unit 55 may output a signal for stepwise decreasing a speed to the output unit 56. Similarly, in a case of increasing the speed the first accumulation conveyor 21, the speed control unit 55 may output a signal for stepwise increasing a speed to the output unit 56.

The output unit 56 changes the drive situation of the corresponding accumulation conveyor 20, based on the signal from the speed control unit 55. The output unit 56 stops or starts the supply conveyor 2 and the delivery conveyor 3, based on input information from another device or an instruction such as stoppage by a worker. The output unit 56 of this embodiment outputs a signal to each servomotor 30 to change the drive situation of the servomotor 30. In this way, the output unit 56 changes the movements of the accumulation conveyors 20, the supply conveyor 2, and the delivery conveyor 3.

The operation of the transport system 1 as described above will be described in accordance with the transport situation of the workpiece W.

In the transport system 1, a large number of workpieces W which have been transported in a state where the workpieces W are randomly disposed on the upstream-side transport conveyor 91 are sent to the alignment conveyor 4. By the alignment conveyor 4, the workpieces W are sent to the supply conveyor 2 while being evenly scattered in the width direction of the accumulation conveyor 20 intersecting the transport direction. The speed of the supply conveyor 2 transporting the workpieces W is set to be slower than that of the alignment conveyor 4 on the upstream side. For this reason, the plurality of workpieces W are densely collected on the supply conveyor 2. The workpieces W are densely collected, so that when the workpieces W are transferred from the supply conveyor 2 to the accumulation conveyor 20 disposed on the most upstream side, a state where the workpieces W are stuffed in the width direction of the accumulation conveyor 20 is created. That is, the workpieces W are sent to the accumulation conveyor 20 in a state of being densely collected in rows, as shown in Fig. 1.

The most-upstream accumulation conveyor 20 also transports the workpieces W which have been sent from the supply conveyor 2 at a speed of several times the speed of the supply conveyor 2. In this way, the workpieces W transferred from the supply conveyor 2 to the most-upstream accumulation conveyor 20 are sent at intervals in the transport direction on the most-upstream accumulation conveyor 20.

In a case where the speeds of the plurality of accumulation conveyors 20 are the same, the workpieces W are sent at intervals in the transport direction to the delivery conveyor 3. The workpieces W sent to the delivery conveyor 3 are sent to the downstream side at approximately the same speed as that of the supply conveyor 2, whereby a state where the workpieces W are densely collected on the delivery conveyor 3 is created. Thereafter, the workpieces W are transferred from the delivery conveyor 3 onto the downstream-side transport conveyor 92. In this way, the workpieces W are sent to a device disposed downstream of the transport system 1 by the downstream-side transport conveyor 92.

Further, in a case where another accumulation conveyor 20 adjacent to the downstream side is stopped or is moving at approximately the same speed as the speed of the supply conveyor 2, the workpieces W which have already been placed on the accumulation conveyor 20 are accumulated at the downstream end.

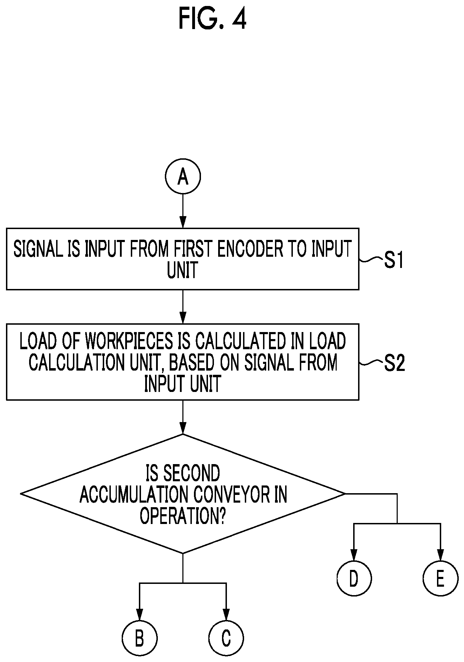

Hereinafter, the operation flow of the accumulation conveyor system 10 will be specifically described with reference to Figs. 4 to 8 by taking the accumulation conveyor system 10 in which the third accumulation conveyor 23, the first accumulation conveyor 21, and the second accumulation conveyor 22 are disposed in this order from the upstream as an example.

As shown in Fig. 4, the first accumulation conveyor 21 continues to move, so that a pulse signal is input from the first encoder 41 to the control unit 50 (S1). The pulse signal from the first encoder 41 is sent to the load calculation unit 52 through the input unit 51. In the load calculation unit 52, the loading situation of the workpieces W for each specified position in the first accumulation conveyor 21 is calculated based on the pulse signal from the first encoder 41. As a result, in the load calculation unit 52, each of the total load which is the load of the workpieces W in the entire area and the partial load which is the load of the workpieces W only in the detection area A is calculated (S2). Information on the loads calculated in the load calculation unit 52 is input to the first overall determination unit 73 and the first determination unit 53.

Here, the first overall determination unit 73 and the first determination unit 53 output different signals to the speed control unit 55 according to the operation situation of the second accumulation conveyor 22. In this way, the first accumulation conveyor 21 moves differently.

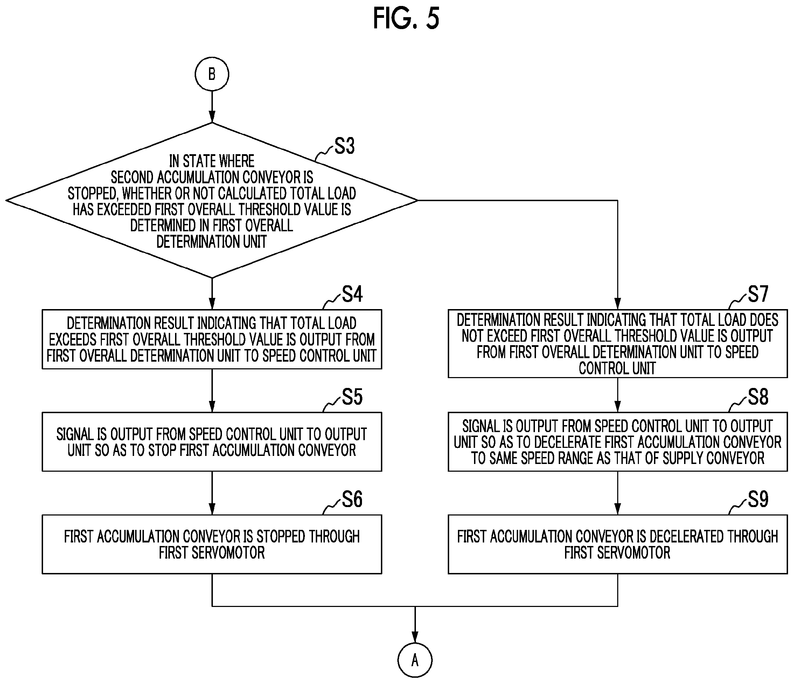

For example, in a state where the second accumulation conveyor 22 is stopped, as shown in Fig. 5, the first overall determination unit 73 determines whether or not the load of the workpieces W in the entire area exceeds the first overall threshold value (S3). That is, in the first overall determination unit 73, whether or not the entire area is filled with the workpieces W is determined.

In a state where the second accumulation conveyor 22 is stopped, a determination result indicating that the total load of the first accumulation conveyor 21 has exceeded the first overall threshold value is output from the first overall determination unit 73 to the speed control unit 55 (S4). In this way, a signal is output from the speed control unit 55 through the output unit 56 so as to stop the corresponding first accumulation conveyor 21 (S5). The signal from the output unit 56 is input to the first servomotor 31, so that the first accumulation conveyor 21 is stopped and the transport of the workpieces W is stopped (S6). In this way, it is possible to prevent an increase in the workpieces W on the first accumulation conveyor 21.

In a state where the second accumulation conveyor 22 is stopped, a determination result indicating that the total load has not exceeded the first overall threshold value is output from the first overall determination unit 73 to the speed control unit 55 (S7). In this way, a signal is output from the speed control unit 55 through the output unit 56 so as to decelerate the corresponding first accumulation conveyor 21 to the same speed range as that of the supply conveyor 2 (S8). The signal from the output unit 56 is input to the first servomotor 31, so that the first accumulation conveyor 21 is decelerated to the same speed range as that of the supply conveyor 2 (S9). In this way, it is possible to slowly send the workpieces W to the first accumulation conveyor 21 until the entire area becomes full.

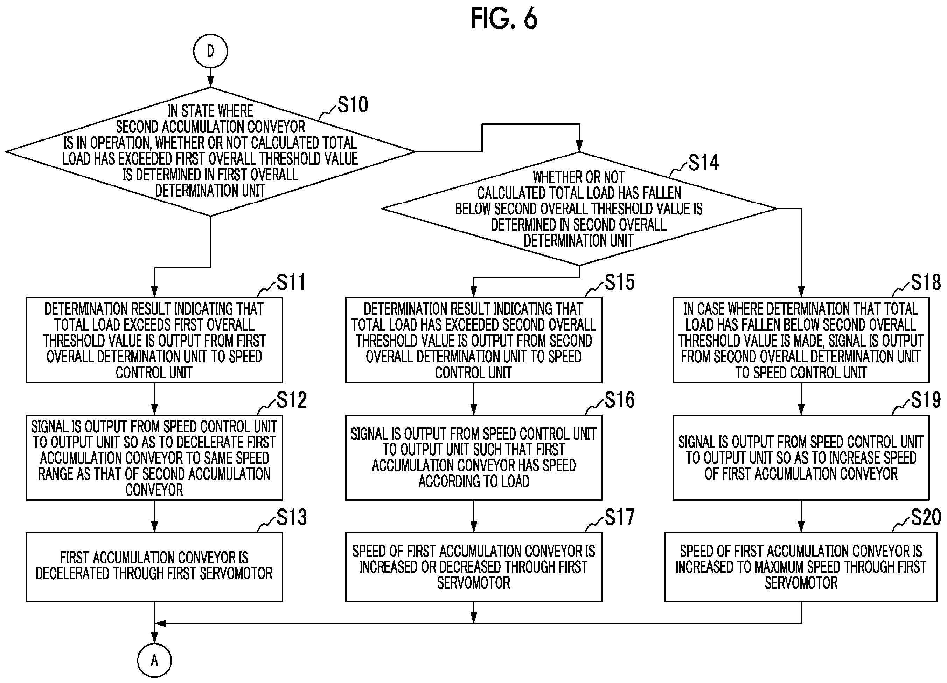

Further, in a state where the second accumulation conveyor 22 is in operation, as shown in Fig. 6, the first overall determination unit 73 determines whether or not the load of the workpieces W in the entire area exceeds the first overall threshold value (S10).

In a state where the second accumulation conveyor 22 is in operation, a determination result indicating that the total load has exceeded the first overall threshold value is output from the first overall determination unit 73 to the speed control unit 55 (S11). In this way, a signal is output from the speed control unit 55 through the output unit 56 so as to decelerate the corresponding first accumulation conveyor 21 to the same speed range as that of the second accumulation conveyor 22 (S12). The signal from the output unit 56 is input to the first servomotor 31, so that the first accumulation conveyor 21 is decelerated to the same speed range as that of the second accumulation conveyor 22 (S13). In this way, even in a state where the second accumulation conveyor 22 is in operation, the workpieces W can be slowly sent to the first accumulation conveyor 21 until the entire area of the first accumulation conveyor 21 becomes full.

In a state in which the second accumulation conveyor 22 is in operation, a determination result indicating that the total load has not exceeded the first overall threshold value is output from the first overall determination unit 73 to the second overall determination unit 74. The second overall determination unit 74 which has received the signal from the first overall determination unit 73 determines whether or not the total load falls below the second overall threshold value (S14).

In a state where the second accumulation conveyor 22 is in operation, a determination result indicating that the total load exceeds the second overall threshold value is output from the second overall determination unit 74 to the speed control unit 55 (S15). In this way, a signal is output from the speed control unit 55 through the output unit 56 such that the corresponding first accumulation conveyor 21 has a speed according to the load (S16). The signal from the output unit 56 is input to the first servomotor 31, so that the speed of the first accumulation conveyor 21 is increased or decreased (S17). In this way, it is possible to send the workpieces W to the entire area of the first accumulation conveyor 21 in a state where a large amount of workpieces W cannot be accumulated although a little space is available, at an appropriate speed at which the workpieces W are not damaged.

In a state where the second accumulation conveyor 22 is in operation, a determination result indicating that the total load falls below the second overall threshold value is output from the second overall determination unit 74 to the speed control unit 55 (S18). In this way, a signal is output from the speed control unit 55 through the output unit 56 so as to increase the speed of the corresponding first accumulation conveyor 21 (S19). The signal from the output unit 56 is input to the first servomotor 31, so that the speed of the first accumulation conveyor 21 is increased to the maximum speed (S20). In this way, it is possible to quickly send the workpieces W to the entire area of the first accumulation conveyor 21 in which a sufficient space is available.

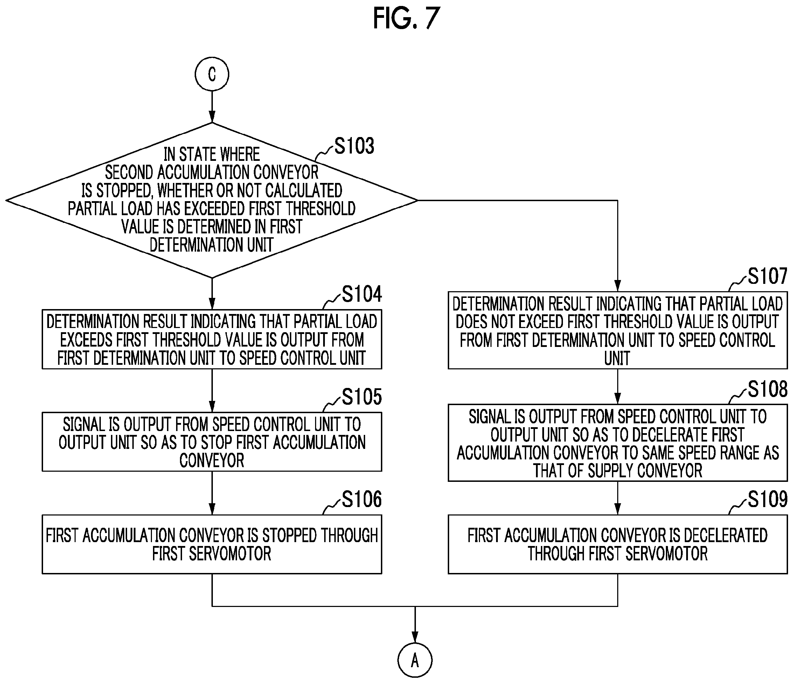

Further, in a state where the second accumulation conveyor 22 is stopped, as shown in Fig. 7, the first determination unit 53 determines whether or not the load of the workpieces W in the entire area exceeds the first threshold value (S103). That is, in the first determination unit 53, whether or not the detection area A is filled with the workpieces W is determined.

In a state where the second accumulation conveyor 22 is stopped, a determination result indicating that the partial load of the first accumulation conveyor 21 has exceeded the first threshold value is output from the first determination unit 53 to the speed control unit 55 (S104). In this way, a signal is output from the speed control unit 55 through the output unit 56 so as to stop the corresponding first accumulation conveyor 21 (S105). The signal from the output unit 56 is input to the first servomotor 31, so that the first accumulation conveyor 21 is stopped and the transport of the workpieces W is stopped (S106). In this way, it is possible to prevent an increase in the workpieces W in the detection area A on the first accumulation conveyor 21.

In a state where the second accumulation conveyor 22 is stopped, a determination result indicating that the partial load has not exceeded the first threshold value is output from the first determination unit 53 to the speed control unit 55 (S107). In this way, a signal is output from the speed control unit 55 through the output unit 56 so as to decelerate the corresponding first accumulation conveyor 21 to the same speed range as that of the supply conveyor 2 (S108). The signal from the output unit 56 is input to the first servomotor 31, so that the first accumulation conveyor 21 is decelerated to the same speed range as that of the supply conveyor 2 (S109). In this way, it is possible to slowly send the workpieces W to the first accumulation conveyor 21 until the detection area A becomes full.

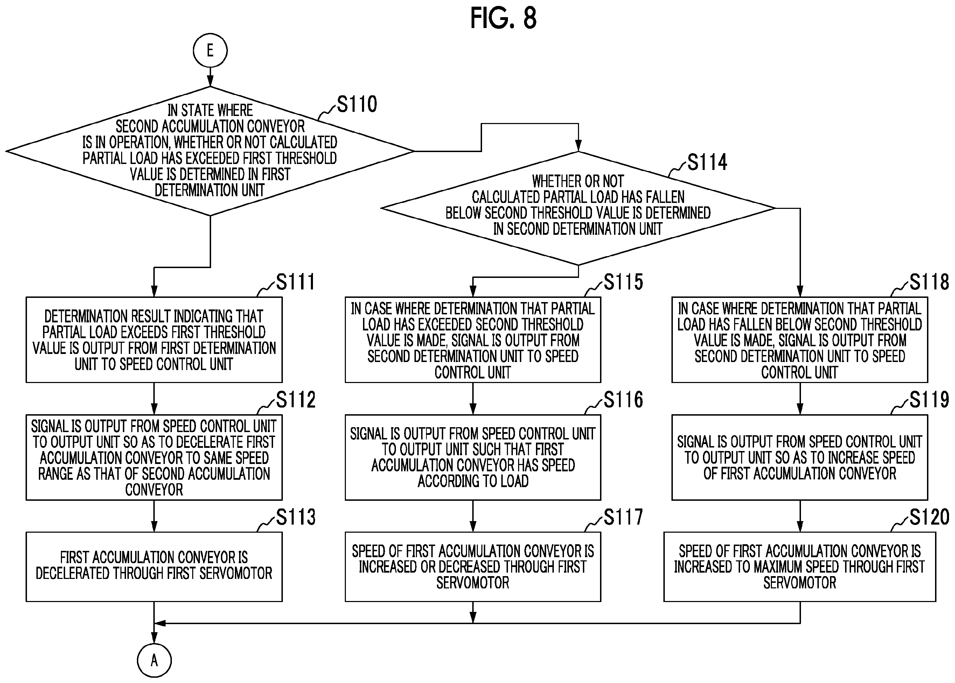

Further, in a state where the second accumulation conveyor 22 is in operation, as shown in Fig. 8, the first determination unit 53 determines whether or not the load of the workpieces W in the detection area A exceeds the first threshold value (S110).

In a state where the second accumulation conveyor 22 is in operation, a determination result indicating that the partial load has exceeded the first threshold value is output from the first determination unit 53 to the speed control unit 55 (S111). In this way, a signal is output from the speed control unit 55 through the output unit 56 so as to decelerate the corresponding first accumulation conveyor 21 to the same speed range as that of the second accumulation conveyor 22 (S112). The signal from the output unit 56 is input to the first servomotor 31, so that the first accumulation conveyor 21 is decelerated to the same speed range as that of the second accumulation conveyor 22 (S113). In this way, even in a state where the second accumulation conveyor 22 is in operation, the workpieces W can be slowly sent to the first accumulation conveyor 21 until the detection area A of the first accumulation conveyor 21 becomes full.

In a state in which the second accumulation conveyor 22 is in operation, a determination result indicating that the partial load has not exceeded the first threshold value is output from the first determination unit 53 to the second determination unit 54. The second determination unit 54 which has received the signal from the first determination unit 53 determines whether or not the partial load falls below the second threshold value (S114).

In a state where the second accumulation conveyor 22 is in operation, a determination result indicating that the partial load exceeds the second threshold value is output from the second determination unit 54 to the speed control unit 55 (S115). In this way, a signal is output from the speed control unit 55 through the output unit 56 such that the corresponding first accumulation conveyor 21 has a speed according to the load (S116). The signal from the output unit 56 is input to the first servomotor 31, so that the speed of the first accumulation conveyor 21 is increased or decreased (S117). In this way, it is possible to send the workpieces W to the detection area A of the first accumulation conveyor 21 in a state where a large amount of workpieces W cannot be accumulated although a little space is available, at an appropriate speed at which the workpieces W are not damaged.

In a state where the second accumulation conveyor 22 is in operation, a determination result indicating that the partial load falls below the second threshold value is output from the second determination unit 54 to the speed control unit 55 (S118). In this way, a signal is output from the speed control unit 55 through the output unit 56 so as to increase the speed of the corresponding first accumulation conveyor 21 (S119). The signal from the output unit 56 is input to the first servomotor 31, so that the speed of the first accumulation conveyor 21 is increased to the maximum speed (S120). In this way, it is possible to quickly send the workpieces W to the detection area A of the first accumulation conveyor 21, in which a sufficient space is available.

According to the operation flow as described above, each of the plurality of accumulation conveyors 20 is independently stopped or changed in speed according to the situation of the adjacent accumulation conveyor on the downstream side. As a result, the workpieces W placed on the accumulation conveyor 20 before speed change are accumulated at the downstream end. Further, the workpieces W which are newly accumulated are sequentially accumulated from the upstream end of the accumulation conveyor 20. In the accumulation conveyor 20, the workpieces W accumulated at the upstream end are transported toward the downstream end while coming into close contact with each other. In this way, the workpieces W are accumulated in the entire area of the accumulation conveyor 20.

In the transport system 1 as described above, a device disposed on the downstream side is stopped, so that the downstream-side transport conveyor 92 is stopped. As a result, the delivery conveyor 3 is stopped. In this way, the workpieces W are densely collected in order from the accumulation conveyor 20 disposed at the most downstream among the plurality of accumulation conveyors 20 and deceleration is started. As a result, the workpieces W are completely accumulated in the entire area, so that the accumulation conveyors 20 are stopped in order from the accumulation conveyor 20 disposed at the most downstream position, based on the signal from the first overall determination unit 73 or the first determination unit 53, as described above. All the accumulation conveyors 20 are stopped, so that the supply conveyor 2 or the alignment conveyor 4 is also stopped.

Thereafter, the device disposed on the downstream side of the transport system 1 resumes operation, so that the downstream-side transport conveyor 92 resumed transport. As a result, the workpieces W densely collected on the delivery conveyor 3 are sent to the downstream-side transport conveyor 92, and the delivery conveyor 3 is restarted. The delivery conveyor 3 is restarted, so that the accumulation conveyor system 10 is also restarted. Specifically, all the accumulation conveyors 20 simultaneously resume operation at a speed slightly faster than the speed of the supply conveyor 2. In this way, the dense collection of the workpieces W starts to be eliminated in order from the upstream end of the accumulation conveyor 20 disposed at the most upstream, which is adjacent to the supply conveyor 2. Thereafter, according to the operation flow described above, each accumulation conveyor 20 is operated while being increased in speed, based on the total load of each accumulation conveyor 20.

In a state in which the dense collection of the workpieces W has started to be eliminated, the device disposed on the downstream side is stopped again, so that a situation where the workpieces W are densely collected partially on the accumulation conveyor 20 is created. If the accumulation conveyor 20 starts to move in a state where the workpieces W are densely collected partially, although there is a space in which the workpieces W are placed, as the entire area, there is a case where the workpieces W are densely collected only in the detection area A which is a partial area from the downstream end. However, in the accumulation conveyor system 10 as described above, it is possible to decrease the speed of the accumulation conveyor 20 according to the partial load of the workpieces W only in the detection area A on each accumulation conveyor 20. Therefore, regardless of the loading state of the workpieces W in the entire area of the accumulation conveyor 20, it is possible to adjust the movement of the accumulation conveyor 20 in accordance with the partial loading state of the workpieces W in the detection area A. For this reason, even in a case where there is a margin in the loading situation of the workpieces W as a whole of the accumulation conveyor 20, in a case where the workpieces W are stuffed in the detection area A, it is possible to decelerate or stop the accumulation conveyor 20. As a result, it is possible to prevent the workpieces W from being excessively sent to the detection area A due to the continuous movement of the accumulation conveyor 20. In this way, it is possible to prevent the pressure that is generated by the movement of the accumulation conveyor 20 from acting so as to excessively send the workpieces W to the workpieces W densely collected in the detection area A. Therefore, even in a case where the workpieces W are densely collected partially in one accumulation conveyor 20, it is possible to suppress damage to the workpiece W.

Further, in a case where the partial load of the detection area A of the first accumulation conveyor 21 exceeds the first threshold value, it is possible to decelerate or stop the first accumulation conveyor 21. In this way, in a case where the workpieces W are densely collected in the detection area A of the first accumulation conveyor 21, it is possible to prevent the workpieces W from being excessively sent to the detection area A of the first accumulation conveyor 21, with high accuracy. Therefore, in a case where the workpieces W are densely collected in the detection area A of the first accumulation conveyor 21, it is possible to suppress damage to the workpieces W with high accuracy.

Further, in a state where the second accumulation conveyor 22 on the downstream side is in operation without stopping, the speed of the first accumulation conveyor 21 is reduced to the same speed range as that of the second accumulation conveyor 22. In this way, even if the second accumulation conveyor 22 is in operation, it is possible to minimize the amount of workpieces W which are sent from the first accumulation conveyor 21 to the second accumulation conveyor 22.

Further, in a state where the second accumulation conveyor 22 is in operation, the speed of the accumulation conveyor 20 is not only reduced according to an increase in the value of the partial load but also increased according to a decrease in the value of the partial load. For this reason, it is possible to increase the speed of the accumulation conveyor 20 according to the partial load. Therefore, in a case where the amount of workpieces W in the detection area A decreases, it is possible to efficiently send the workpieces W to the detection area A.

Further, in a state where the second accumulation conveyor 22 is in operation, in a case where the partial load of the detection area A of the first accumulation conveyor 21 falls below the second threshold value, it is possible to increase the speed of the first accumulation conveyor 21. In particular, in a case where the partial load of the detection area A falls below the first threshold value due to making the second threshold value the same value as the first threshold value, it is possible to increase the speed of the first accumulation conveyor 21. In this way, in a case where the amount of workpieces W densely collected in the detection area A of the first accumulation conveyor 21 is small, it is possible to increase the amount of workpieces W in the detection area A by sending new workpieces W from the upstream side of the first accumulation conveyor 21 to the detection area A. For this reason, it is possible to prevent a reduction in the amount of workpieces W which are sent from the detection area A facing the downstream end of the first accumulation conveyor 21 to the second accumulation conveyor 22. In this way, it is possible to continue to stably send the workpieces W from the first accumulation conveyor 21 to the second accumulation conveyor 22.

Further, after a determination is made by the first determination unit 53, the second determination unit 54 determines the partial load with a value smaller than the first threshold value. In this way, in a case where although the amount of workpieces W densely collected in the detection area A of the first accumulation conveyor 21 is not full, a space for receiving the workpieces W is available, it is possible to increase or decrease the speed of the first accumulation conveyor 21 according to the partial load. That is, it is possible to send an appropriate amount of workpieces W to the detection area A at an appropriate speed. For this reason, it is possible to add the workpiece W to the detection area A in which the workpieces W have already been placed, without applying a great load to the workpieces W. Therefore, It is possible to prevent a reduction in the amount of workpieces W which are sent from the detection area A facing the downstream end of the first accumulation conveyor 21 to the second accumulation conveyor 22, while suppressing occurrence of an excessive burden on the workpieces W already disposed in the detection area A.

Further, it is possible to change the speed of the accumulation conveyor 20 according to the total load on each accumulation conveyor 20 in addition to the partial load by using the first overall determination unit 73 and the second overall determination unit 74. Specifically, in a case where the total load of the first accumulation conveyor 21 exceeds the first overall threshold value, it is possible to decelerate or stop the first accumulation conveyor 21. Further, in a case where the total load of the first accumulation conveyor 21 falls below the second overall threshold value, it is possible to increases the speed of the first accumulation conveyor 21. Therefore, it is possible to adjust the movement of the first accumulation conveyor 21 according to the loading state of the workpieces W in the entire area of the first accumulation conveyor 21 and then adjust the movement of the first accumulation conveyor 21 in accordance with the partial loading state of the workpieces W in the detection area A. As a result, it is possible to prevent excessive pressure from acting on the workpieces W densely collected partly in the detection area A while preventing the workpieces from being excessively sent to the first accumulation conveyor 21 as a whole.

Further, the load calculation unit 52 can stably grasp the loading situation of the workpieces W on the accumulation conveyor 20 by using the count information stored in the storage area B based on the pulse signal from the encoder 40. The load calculation unit 52 can calculate the load of the workpieces W only in the detection area A by using the loading situation of the workpieces W. Therefore, the load of the workpieces W only in the detection area A can be stably obtained with a simple configuration using the encoder 40.

Further, by suppressing damage to the workpiece W by the accumulation system, it is possible to stably supply the undamaged workpiece W to the transport conveyor 92 disposed on the downstream side of the delivery conveyor 3. In this way, it is possible to transport the workpiece W having stable quality to the device disposed downstream.

The embodiments of the present invention have been described in detail above with reference to the drawings. However, the respective configurations, combinations thereof, and the like in each embodiment are merely examples, and additions, omissions, substitutions, and other modifications of configurations can be made within the scope of the invention as defined in the appended claims. Further, the present invention is not limited by the embodiments and is limited only by the claims.

In this embodiment, the workpiece W is set to be a container that is easy to be dented like a PET bottle. However, there is no limitation thereto. For example, the workpiece W may be a fragile bottle, a hard product such as canned food packed with foodstuffs or the like, or a member on a box such as a corrugated box.

Further, the partial load detection unit 60 is not limited to a configuration in which it is composed of the encoder 40 and the load calculation unit 52, as in this embodiment. With respect to the partial load detection unit 60, it is acceptable if it can detect the load of the workpieces W only in the detection area A. For example, the partial load detection unit 60 may detect the load of the workpieces W only in the detection area A by capturing an image of the detection area A with a camera. Further, the partial load detection unit 60 may detect the load of the workpieces W only in the detection area A by using the result of measurement of a load of the detection area A with a load cell. Further, the partial load detection unit 60 may detect the load of the workpieces W only in the detection area A by using the result of measurement of the deflection amount in the detection area A of the accumulation conveyor 20 by a strain gauge. Further, the partial load detection unit 60 may detect the load of the workpieces W only in the detection area A by using the result of measurement of a vehicle height ratio in the detection area A by a sensor.

Further, in the accumulation conveyor system 10, a discharge conveyor for transporting the workpieces W always in close contact with each other may be provided between the delivery conveyor 3 and the accumulation conveyor 20 in order to stably send a certain amount of workpieces W to the delivery conveyor 3.

### Industrial Applicability

According to the accumulation conveyor system, by changing the speed of the accumulation conveyor according to the load of workpieces only in the detection area, it is possible to suppress damage to the workpiece even in a case where the workpieces are densely collected partially on one accumulation conveyor.

### Reference Signs List

- 1:: transport system
- W:: workpiece
- 2:: supply conveyor
- 4:: alignment conveyor
- 8:: bridge plate
- 10:: accumulation conveyor system
- 20:: accumulation conveyor
- 21:: first accumulation conveyor
- 22:: second accumulation conveyor
- 23:: third accumulation conveyor
- 30:: servomotor
- 40:: encoder
- 41:: first encoder
- 42:: second encoder
- 43:: third encoder
- 45:: carry-out encoder
- 50:: control unit
- 51:: input unit
- 52:: load calculation unit
- 60:: partial load detection unit
- A:: detection area
- B:: storage area
- 73:: first overall determination unit
- 74:: second overall determination unit
- 53:: first determination unit
- 54:: second determination unit
- 55:: speed control unit
- 56:: output unit
- 3:: delivery conveyor
- 91:: upstream-side transport conveyor
- 92:: downstream-side transport conveyor

## Claims

1. An accumulation conveyor system comprising:
a plurality of accumulation conveyors (20) arranged such that workpieces (W) are sequentially transported toward the downstream side;
a partial load detection unit (60) that is configured to detect a partial load that is a load of the workpieces (W) only in a detection area (A) that is a partial area which includes a downstream end in a transport direction of an area in which the workpiece (W) is transported on at least one accumulation conveyor (20) among the plurality of accumulation conveyors (20); and
a speed control unit (55) that is configured to adjust a speed of the at least one accumulation conveyor (20), based on a value of the partial load detected by the partial load detection unit (60),
wherein the speed control unit (55) is configured to decrease the speed of the at least one accumulation conveyor (20) according to an increase in the value of the partial load,
**characterized in that**
the partial load detection unit (60) includes
a plurality of encoders (40) which are provided for each of the accumulation conveyors (20) and are configured to output a signal according to a transport distance of the accumulation conveyor (20) in which the workpiece is transported, and
a load calculation unit (52) that is configured to calculate the partial load according to the signal from the encoders (40) of the at least one accumulation conveyor among the plurality of accumulation conveyors (20).

2. The accumulation conveyor system according to claim 1, further comprising:
a first determination unit (53) that determines whether or not the value of the partial load of a first accumulation conveyor (21) that is one of the plurality of accumulation conveyors (20), detected by the partial load detection unit (60), has exceeded a first threshold value determined in advance,
wherein the speed control unit (55) decreases a speed of the first accumulation conveyor (21) in a case where the first determination unit (53) determines that the value of the partial load has exceeded the first threshold value.

3. The accumulation conveyor system according to claim 2, wherein the speed control unit (55) decreases the speed of the first accumulation conveyor (21) to the same speed range as that of a second accumulation conveyor (22) adjacent to the first accumulation conveyor on the downstream side, in a case where the first determination unit (53) determines that the value of the partial load has exceeded the first threshold value.

4. The accumulation conveyor system according to any one of claims 1 to 3, wherein the speed control unit (55) increases the speed of the accumulation conveyor (20) according to a decrease in the value of the partial load.

5. The accumulation conveyor system according to claim 4, further comprising:
a second determination unit (54) that determines whether or not the value of the partial load of a first accumulation conveyor (21) that is one of the plurality of accumulation conveyors (20), detected by the partial load detection unit (60), has fallen below a second threshold value determined in advance,
wherein the speed control unit (55) increases the speed of the first accumulation conveyor (21) in a case where the second determination unit (54) determines that the value of the partial load has fallen below the second threshold value.

6. The accumulation conveyor system according to any one of claims 1 to 5, further comprising:
a total load detection unit (70) that detects a total load that is a load of the workpieces (W) in an entire area in which the workpieces (W) are transported on the one accumulation conveyor (20); and
a first overall determination unit (73) that determines whether or not a value of the total load of a first accumulation conveyor (21) that is one of the plurality of accumulation conveyors (20), detected by the total load detection unit (60), has exceeded a first overall threshold value determined in advance,
wherein the speed control unit (55) decreases a speed of the first accumulation conveyor (21) in a case where the first overall determination unit (73) determines that the value of the total load has exceeded the first overall threshold value.

7. A transport system comprising:
the accumulation conveyor system (10) according to any one of claims 1 to 6;
a supply conveyor (2) disposed on the upstream side of the plurality of accumulation conveyors (20) in the transport direction to introduce the workpieces (W) to the plurality of accumulation conveyors (20); and
a delivery conveyor (3) disposed on the downstream side of the plurality of accumulation conveyors (20) in the transport direction to carry the workpieces (W) out of the plurality of accumulation conveyors (20).

## Patentansprüche

1. Akkumulationsförderersystem, umfassend:
eine Vielzahl von Akkumulationsförderern (20), die so angeordnet ist, dass Werkstücke (W) sequentiell in Richtung der Stromabwärtsseite transportiert werden;
eine Teillast-Detektionseinheit (60), die ausgebildet ist, um eine Teillast zu detektieren, die eine Last der Werkstücke (W) nur in einem Detektionsbereich (A) ist, der ein Teilbereich ist, der ein Stromabwärtsende in einer Transportrichtung eines Bereichs einschließt, in dem das Werkstück (W) auf mindestens einem Akkumulationsförderer (20) aus der Vielzahl von Akkumulationsförderern (20) transportiert wird; und
eine Geschwindigkeitssteuereinheit (55), die ausgebildet ist, um eine Geschwindigkeit des mindestens einen Akkumulationsförderers (20) basierend auf einem Wert der von der Teillast-Detektionseinheit (60) detektierten Teillast anzupassen,
wobei die Geschwindigkeitssteuereinheit (55) ausgebildet ist, um die Geschwindigkeit des mindestens einen Akkumulationsförderers (20) nach einer Erhöhung des Wertes der Teillast zu verringern,
**dadurch gekennzeichnet, dass**
die Teillast-Detektionseinheit (60) Folgendes einschließt
eine Vielzahl von Encodern (40), die für jeden der Akkumulationsförderer (20) bereitgestellt sind und ausgebildet sind, um ein Signal nach einem Transportabstand des Akkumulationsförderers (20) auszugeben, in dem das Werkstück transportiert wird, und
eine Lastberechnungseinheit (52), die ausgebildet ist, um die Teillast nach dem Signal von den Encodern (40) des mindestens einen Akkumulationsförderers unter der Vielzahl von Akkumulationsförderern (20) zu berechnen.

2. Akkumulationsförderersystem nach Anspruch 1, weiter umfassend:
eine erste Bestimmungseinheit (53), die bestimmt, ob der von der Teillast-Detektionseinheit (60) detektierte Wert der Teillast eines ersten Akkumulationsförderers (21), der einer der Vielzahl von Akkumulationsförderern (20) ist, einen im Voraus bestimmten ersten Schwellenwert überschritten hat oder nicht,
wobei die Geschwindigkeitssteuereinheit (55) eine Geschwindigkeit des ersten Akkumulationsförderers (21) in einem Fall verringert, in dem die erste Bestimmungseinheit (53) bestimmt, dass der Wert der Teillast den ersten Schwellenwert überschritten hat.

3. Akkumulationsförderersystem nach Anspruch 2, wobei die Geschwindigkeitssteuereinheit (55) die Geschwindigkeit des ersten Akkumulationsförderers (21) auf den gleichen Geschwindigkeitsbereich wie den eines zweiten Akkumulationsförderers (22), der an den ersten Akkumulationsförderer auf der Stromabwärtsseite angrenzt, in einem Fall verringert, in dem die erste Bestimmungseinheit (53) bestimmt, dass der Wert der Teillast den ersten Schwellenwert überschritten hat.

4. Akkumulationsförderersystem nach einem der Ansprüche 1 bis 3, wobei die Geschwindigkeitssteuereinheit (55) die Geschwindigkeit des Akkumulationsförderers (20) nach einer Abnahme des Wertes der Teillast erhöht.

5. Akkumulationsförderersystem nach Anspruch 4, weiter umfassend:
eine zweite Bestimmungseinheit (54), die bestimmt, ob der Wert der Teillast eines ersten Akkumulationsförderers (21), der einer der Vielzahl von Akkumulationsförderern (20) ist, der von der Teillast-Detektionseinheit (60) detektiert wird, unter einen zweiten, im Voraus bestimmten Schwellenwert gefallen ist oder nicht,
wobei die Geschwindigkeitssteuereinheit (55) die Geschwindigkeit des ersten Akkumulationsförderers (21) in einem Fall erhöht, in dem die zweite Bestimmungseinheit (54) bestimmt, dass der Wert der Teillast unter den zweiten Schwellenwert gefallen ist.

6. Akkumulationsförderersystem nach einem der Ansprüche 1 bis 5, weiter umfassend:
eine Gesamtlast-Detektionseinheit (70), die eine Gesamtlast detektiert, die eine Last der Werkstücke (W) in einem gesamten Bereich ist, in dem die Werkstücke (W) auf dem einen Akkumulationsförderer (20) transportiert werden; und
eine erste Gesamtbestimmungseinheit (73), die bestimmt, ob ein Wert der Gesamtlast eines ersten Akkumulationsförderers (21), der einer der Vielzahl von Akkumulationsförderern (20) ist, der von der Gesamtlast-Detektionseinheit (60) detektiert wurde, einen ersten Gesamtschwellenwert, der im Voraus bestimmt wurde, überschritten hat oder nicht,
wobei die Geschwindigkeitssteuereinheit (55) eine Geschwindigkeit des ersten Akkumulationsförderers (21) in einem Fall verringert, in dem die erste Gesamtbestimmungseinheit (73) bestimmt, dass der Wert der Gesamtlast den ersten Gesamtschwellenwert überschritten hat.

7. Transportsystem, umfassend:
das Akkumulationsförderersystem (10) nach einem der Ansprüche 1 bis 6;
einen Zuführförderer (2), der auf der Stromaufwärtsseite der Vielzahl von Akkumulationsförderern (20) in Transportrichtung angeordnet ist, um die Werkstücke (W) in die Vielzahl von Akkumulationsförderern (20) einzuführen; und
einen Abgabeförderer (3), der auf der Stromabwärtsseite der Vielzahl von Akkumulationsförderern (20) in der Transportrichtung angeordnet ist, um die Werkstücke (W) aus der Vielzahl von Akkumulationsförderern (20) zu tragen.

## Revendications

1. Système de transporteurs accumulateurs comprenant :
une pluralité de transporteurs accumulateurs (20) agencés de telle sorte que des pièces (W) sont transportées séquentiellement vers le côté aval ;
une unité de détection de charge partielle (60) qui est configurée pour détecter une charge partielle qui est une charge des pièces (W) uniquement dans une zone de détection (A) qui est une zone partielle qui inclut une extrémité aval dans une direction de transport d'une zone dans laquelle la pièce (W) est transportée sur au moins un transporteur accumulateur (20) parmi la pluralité de transporteurs accumulateurs (20) ; et
une unité de commande de vitesse (55) qui est configurée pour ajuster une vitesse de l'au moins un transporteur accumulateur (20), sur la base d'une valeur de la charge partielle détectée par l'unité de détection de charge partielle (60),
dans lequel l'unité de commande de vitesse (55) est configurée pour diminuer la vitesse de l'au moins un transporteur accumulateur (20) en fonction d'une augmentation de la valeur de la charge partielle,
**caractérisé en ce que**
l'unité de détection de charge partielle (60) inclut
une pluralité de codeurs (40) qui sont prévus pour chacun des transporteurs accumulateurs (20) et sont configurés pour émettre en sortie un signal en fonction d'une distance de transport du transporteur accumulateur (20) dans lequel la pièce est transportée, et
une unité de calcul de charge (52) qui est configurée pour calculer la charge partielle en fonction du signal provenant des codeurs (40) de l'au moins un transporteur accumulateur parmi la pluralité de transporteurs accumulateurs (20).

2. Système de transporteurs accumulateurs selon la revendication 1, comprenant en outre :
une première unité de détermination (53) qui détermine si la valeur de la charge partielle d'un premier transporteur accumulateur (21) qui est l'un de la pluralité de transporteurs accumulateurs (20), détectée par l'unité de détection de charge partielle (60), a dépassé ou non une première valeur seuil déterminée à l'avance,
dans lequel l'unité de commande de vitesse (55) diminue une vitesse du premier transporteur accumulateur (21) dans un cas où la première unité de détermination (53) détermine que la valeur de la charge partielle a dépassé la première valeur seuil.

3. Système de transporteurs accumulateurs selon la revendication 2, dans lequel l'unité de commande de vitesse (55) diminue la vitesse du premier transporteur accumulateur (21) au niveau de la même plage de vitesse que celle d'un deuxième transporteur accumulateur (22) adjacent au premier transporteur accumulateur sur le côté aval, dans un cas où la première unité de détermination (53) détermine que la valeur de la charge partielle a dépassé la première valeur seuil.

4. Système de transporteurs accumulateurs selon l'une quelconque des revendications 1 à 3, dans lequel l'unité de commande de vitesse (55) augmente la vitesse du transporteur accumulateur (20) en fonction d'une diminution de la valeur de la charge partielle.

5. Système de transporteurs accumulateurs selon la revendication 4, comprenant en outre :
une deuxième unité de détermination (54) qui détermine si la valeur de la charge partielle d'un premier transporteur accumulateur (21) qui est l'un de la pluralité de transporteurs accumulateurs (20), détectée par l'unité de détection de charge partielle (60), est tombée ou non en dessous d'une deuxième valeur seuil déterminée à l'avance,
dans lequel l'unité de commande de vitesse (55) augmente la vitesse du premier transporteur accumulateur (21) dans un cas où la deuxième unité de détermination (54) détermine que la valeur de la charge partielle est tombée en dessous de la deuxième valeur seuil.

6. Système de transporteurs accumulateurs selon l'une quelconque des revendications 1 à 5, comprenant en outre :
une unité de détection de charge totale (70) qui détecte une charge totale qui est une charge des pièces (W) dans une zone entière dans laquelle les pièces (W) sont transportées sur ledit transporteur accumulateur (20) ; et
une première unité de détermination globale (73) qui détermine si une valeur de la charge totale d'un premier transporteur accumulateur (21) qui est l'un de la pluralité de transporteurs accumulateurs (20), détectée par l'unité de détection de charge totale (60), a dépassé ou non une première valeur seuil globale déterminée à l'avance,
dans lequel l'unité de commande de vitesse (55) diminue une vitesse du premier transporteur accumulateur (21) dans un cas où la première unité de détermination globale (73) détermine que la valeur de la charge totale a dépassé la première valeur seuil globale.

7. Système de transport comprenant :
le système de transporteurs accumulateurs (10) selon l'une quelconque des revendications 1 à 6 ;
un convoyeur d'amenée (2) disposé du côté amont de la pluralité de transporteurs accumulateurs (20) dans la direction de transport pour introduire les pièces (W) dans la pluralité de transporteurs accumulateurs (20) ; et
un convoyeur de sortie (3) disposé du côté aval de la pluralité de transporteurs accumulateurs (20) dans la direction de transport pour transporter les pièces (W) hors de la pluralité de transporteurs accumulateurs (20).
